# EUROPÄISCHE PATENTANMELDUNG

(11) **EP 2 489 900 A1**
(43) Veröffentlichungstag der Anmeldung: **22.08.2012**
(21) Anmeldenummer: 11154660.2
(22) Anmeldetag: 16.02.2011
(51) Int. Cl.: F16G 3/00, E05F 15/16

(54) **Riemenendbefestigung**

(71) Anmelder: BRECO Antriebstechnik Breher GmbH & Co. KG, 32457 Porta Westfalica (DE)
(72) Erfinder: Kölling, Rudi, 32602 Vlotho (DE)
(74) Vertreter: Zenz

(57) **Zusammenfassung**

Bei einem Riemen eines Linearantriebs, der einen an einer Befestigungsvorrichtung (50) anbringbaren Grundriemen (9) mit endlicher Riemenlänge aufweist, soll eine Lösung geschaffen werden, durch die der herstellungstechnische Aufwand vermindert wird und mit der auf konstruktiv einfache Weise und kostengünstig eine zuverlässige Endbefestigung für einen endlichen Riemen zur Verfügung steht, die hohen Belastungen standhält. Dies wird dadurch erreicht, dass der Grundriemen (8) zumindest im Bereich eines seiner beiden Längsenden (3) wenigstens eine zu seiner Anbringung dienende Riemenendbefestigung (9) aufweist, die zumindest einen mit dem Grundriemen (8) einstückig ausgebildeten und eine größere Höhe (21) als der Grundriemen (8) aufweisenden Klemmkörper (10, 10', 10'') umfasst, der mit dem Grundriemen (8) stoffschlüssig verbunden ist.

## Beschreibung

Die Erfindung richtet sich auf einen Riemen eines Linearantriebs, der einen an einer Befestigungsvorrichtung anbringbaren Grundriemen mit endlicher Riemenlänge aufweist. Ferner richtet sich die Erfindung auf ein Riemeneinspannsystem eines Linearantriebs, das einen Riemen und zumindest eine den Riemen haltende Befestigungsvorrichtung umfasst, wobei der Riemen einen Grundriemen mit endlicher Riemenlänge aufweist und wenigstens eines der beiden Längsenden des Grundriemens an der Befestigungsvorrichtung anbringbar ist. Darüber hinaus richtet sich die Erfindung auf ein Verfahren zur Herstellung eines Riemens eines Linearantriebs, der einen Grundriemen mit endlicher Riemenlänge aufweist, der an einer Befestigungsvorrichtung anbringbar ist, wobei der Grundriemen zumindest im Bereich eines seiner beiden Längsenden wenigstens eine an der Befestigungsvorrichtung fixierbare Riemenendbefestigung mit einem Klemmkörper aufweist.

Riemen mit endlicher Riemenlänge werden zum Antrieb von beispielsweise Toren, Hubvorrichtungen, Portalen oder Linearachsen eingesetzt, wobei sie zur Erzielung von linearen Bewegungen besonders geeignet sind. Die endlichen Riemen werden beispielsweise mit ihren Enden über eine in Form einer Spannvorrichtung ausgebildeten Befestigungsvorrichtung an einem linear zu verschiebenden Bau- oder Maschinenteil befestigt. Diese Endbefestigung wird bei beispielsweise mit Zähnen ausgestatteten Riemen bislang durch Verschrauben von einer profilierten Platte mit einer Andrückplatte vorgenommen, wobei die profilierte Platte und die Andrückplatte die Spannvorrichtung für den Riemen bilden. Die profilierte Spannplatte muss mit bei einem mit Zähnen versehenen Riemen mit einem entsprechenden Zahnprofil versehen sein. Auf der unprofilierten Oberfläche des Zahnriemenendes liegt die Andrückplatte auf. Die Spannplatte und die Andrückplatte werden mit Hilfe von Spannschrauben gegeneinander festgezogen, so dass das Riemenende auf Seiten der Andrückplatte kraftschlüssig und auf Seiten der Spannplatte formschlüssig eingefasst bzw. eingespannt ist.

An endliche Riemen werden besondere technische Anforderungen zur schlüssigen Verbindung ihrer Enden mit weiteren Komponenten gestellt, da die Zugspannungen der Riemen auf weitere Komponenten vorzugsweise derart überführt werden sollten, dass die Verbindungsstelle Riemen-Spannvorrichtung keine Schwachstelle darstellt. Jedoch ist es bekannt, dass bei mit Hilfe von Spann- und Andrückplatte eingespannten Riemen die Platten eine Tendenz zur Aufwölbung aufweisen, da ihre Verschraubung nicht in der Lage ist, die vom Riemen erzeugten Querkräfte aufzunehmen.

Ein Riemeneinspannsystem der eingangs genannten Art ist beispielsweise aus der DE 20 2005 006 791 U1 bekannt und soll der Tendenz zur Aufwölbung der Platten infolge einer ungleichmäßigen Druckverteilung in der Verpressung bzw. Einfassung entgegenwirken. Bei diesem bekannten Riemeneinspannsystem ist das Ende eines Zahnriemens von einer Spannvorrichtung gehalten, die selbst in klemmender Weise in einer Ausnehmung eines Maschinenelements befestigt ist. Die Spannvorrichtung wird von einer Spannplatte und einer Andrückplatte gebildet, wobei die beiden Platten über einen Steg miteinander verbunden sind. Durch diese konstruktive Ausgestaltung soll unter Krafteinwirkung eine Aufwölbung der Platten verhindert werden und ein sicherer Halt des Riemens gewährleistet sein. Da eine solche Spannvorrichtung jedoch erheblichen Belastungen standhalten muss, ist sie in massiver Bauweise auszuführen, wodurch der herstellungstechnische Aufwand erheblich ist. Darüber hinaus weist dieses Riemeneinspannsystem eine gewisse Inflexibilität auf, denn die Spannvorrichtung ist immer an das Zahnprofil des Riemens anzupassen. Ein Austausch einer Komponente zur Anwendungsadaption, wie beispielsweise ein Austausch des Zahnriemens mit einem Zahnriemen, welcher ein anderes Zahnprofil aufweist, zieht konsequenterweise eine Adaption zumindest der Spannplatte der Spannvorrichtung nach sich.

Der Erfindung liegt die Aufgabe zugrunde, den herstellungstechnischen Aufwand sowohl für einen Riemen als auch für ein Riemeneinspannsystem zu vermindern und eine Lösung zu schaffen, mit der auf konstruktiv einfache Weise und kostengünstig eine zuverlässige Endbefestigung für einen endlichen Riemen zur Verfügung steht, die hohen Belastungen standhält.

Bei einem Riemen der eingangs bezeichneten Art wird diese Aufgabe erfindungsgemäß dadurch gelöst, dass der Grundriemen zumindest im Bereich eines seiner beiden Längsenden wenigstens eine zu seiner Anbringung dienende Riemenendbefestigung aufweist, die zumindest einen mit dem Grundriemen einstückig ausgebildeten und eine größere Höhe als der Grundriemen aufweisenden Klemmkörper umfasst, der mit dem Grundriemen stoffschlüssig verbunden ist. Der Klemmkörper ist umfangsmäßig um den Grundriemen herum angeordnet. Somit umgibt der Klemmkörper vollumfänglich den Grundriemen in dessen Endbereich und bildet mit dem Grundriemen zusammen einen homogenen und einteiligen Riemen.

Ebenso wird bei einem Riemeneinspannsystem der eingangs bezeichneten Art diese Aufgabe erfindungsgemäß dadurch gelöst, dass der Grundriemen zumindest im Bereich eines seiner beiden Längsenden wenigstens eine zu seiner Anbringung dienende Riemenendbefestigung aufweist, die zumindest einen mit dem Grundriemen einstückig ausgebildeten und eine größere Höhe als der Grundriemen aufweisenden Klemmkörper umfasst, der mit dem Grundriemen stoffschlüssig verbunden ist. Dabei kann die Spannvorrichtung die Riemenendbefestigung in kraftschlüssiger und/oder formschlüssiger Weise einfassen und/oder einspannen, wobei auch hier der Klemmkörper den Grundriemen in dessen Endbereich vollumfänglich umgibt und mit dem Grundriemen zusammen einen homogenen und einteiligen Riemen bildet.

Schließlich wird bei einem Verfahren der eingangs bezeichneten Art diese Aufgabe erfindungsgemäß dadurch gelöst, dass zur Herstellung des von Grundriemen und Riemenendbefestigung gebildeten Riemens der Klemmkörper der Riemenendbefestigung stoffschlüssig mit dem Grundriemen verbunden wird.

Vorteilhafte und zweckmäßige Ausgestaltungen und Weiterbildungen der Erfindung ergeben sich aus den entsprechenden Unteransprüchen.

Durch die Erfindung wird eine Möglichkeit bereitgestellt, mit welcher auf konstruktiv einfache Weise und kostengünstig die Befestigung eines Riemenendes verbessert und erleichtert wird, wobei die Verbindungsstelle von Riemen und Befestigungsvorrichtung hohen Belastungen standhält. Im Gegensatz zu bekannten mechanischen Konstruktionen, bei denen die Befestigungsvorrichtung das Riemenende einfasst und bei denen sie erheblichen Belastungen ausgesetzt ist, die durch die Zahngeometrie hervorgerufen werden und in Richtung der Befestigungsvorrichtung wirken, so dass die Platten der Spannvorrichtung eine Tendenz zur Aufwölbung aufweisen, ist erfindungsgemäß der Klemmkörper einstückig an und mit dem Grundriemen ausgebildet und stoffschlüssig mit diesem verbunden. Dabei handelt es sich nicht um eine einfache Verklebung, sondern um eine Materialverschmelzung, durch die der Grundriemen und der Klemmkörper als homogene Einheit ausgebildet sind. Die stoffschlüssige Verbindung hält hohen Belastungen stand und gewährleistet darüber hinaus eine gleichmäßige Verteilung des auf die Befestigungsvorrichtung wirkenden Druckes, wodurch die Tendenz zur Aufwölbung auf ein Mindestmaß reduziert ist. Im Gegensatz zu den aus dem Stand der Technik bekannten Lösungen ist die Riemenendbefestigung erfindungsgemäß Teil des Riemens. Dadurch ist eine konstruktive Ausgestaltung der Riemenendbefestigung möglich, die universell bei einer den Riemen einspannenden Befestigungsvorrichtung verwendbar ist, ohne dass hierbei eine Abhängigkeit zwischen Riemenprofil (Zahn-oder Flachriemen) und Befestigungsvorrichtung gegeben ist. Es entfällt somit der Bedarf einer Anpassung der Befestigungsvorrichtung an ein beispielsweise geändertes Zahnprofil eines Riemens, denn die Riemeneinfassung in Form des Klemmkörpers ist selbst Teil des Riemens.

Im Hinblick auf eine kostengünstige und einfache Herstellung des Riemens sieht die Erfindung in Ausgestaltung des Verfahrens vor, dass die stoffschlüssige Verbindung zwischen dem Klemmkörper der Riemenendbefestigung und dem Grundriemen nach Herstellung des Grundriemens hergestellt wird, indem das Längsende des Grundriemens in eine Spritzform eingelegt wird und zur Ausbildung des Klemmkörpers ein Abschnitt des Längsendes des Grundriemens mit einem den Klemmkörper formenden Material umfangsmäßig umspritzt wird, wobei durch die Temperatur des zur Umspritzung verwendeten Materials die Oberfläche des Grundriemens angelöst wird, und wobei nach Umspritzung das Material abgekühlt wird und durch Abkühlung der Klemmkörper stoffschlüssig mit dem Grundriemen verbunden wird. Auf diese Weise ist gewährleistet, dass die stoffschlüssige Verbindung eine homogene Einheit von Grundriemen und Klemmkörper bildet. Darüber hinaus ermöglicht das Umspritzen des Grundriemens eine Variabilität hinsichtlich der konstruktiven Ausgestaltung des Klemmkörpers.

Als Alternativ zu diesem Verfahren ist es auch denkbar, dass erst an dem Einsatzort des Riemens der Klemmkörper mit dem Grundriemen stoffschlüssig verbunden wird. Hierzu sieht die Erfindung in alternativer Ausgestaltung des Verfahrens vor, dass der Klemmkörper der Riemenendbefestigung aus wenigstens zwei schalenartigen Klemmelementen gebildet wird, wobei nach Herstellung des Grundriemens die zu verbindenden Oberflächen des Grundriemens und der Klemmelemente mittels eines Lösungsmittels angelöst und zur Bildung der Riemenendbefestigung unter Erwärmung zusammengelegt werden und anschließend die zu verbindenden Oberflächen unter Druckeinwirkung für eine vorbestimmte Zeitdauer zusammengehalten werden. Dadurch ist es möglich, dass der Riemen quasi als Endlosriemen hergestellt wird. Die tatsächlich benötigte Länge wird erst am Bestimmungsort festgelegt und der Riemen auf die benötigte Länge abgelängt bzw. gekürzt. Im Anschluss daran kann der Klemmkörper mittels einfacher Verfahrensschritte an dem Grundriemen zur Bildung der Riemenendbefestigung auf stoffschlüssige Weise angebracht werden.

Hinsichtlich einer einfachen und kostengünstigen Ausbildung der Riemenendbefestigung sieht die Erfindung in Ausgestaltung des Riemens vor, dass der Klemmkörper im Wesentlichen mehreckig, vorzugsweise quaderförmig, ausgebildet ist. Die zur Herstellung eines solchen Körpers benötigten Formwerkzeuge sind aufgrund der geringen Ansprüche an die Formgebung einfach herzustellen und kostengünstig zu beziehen.

Um eine Schiefstellung der Befestigungsvorrichtung in Bezug auf die Betriebsachse des Riemens auszugleichen ist in weiterer Ausgestaltung des Riemens vorgesehen, dass zumindest eine der beiden im Wesentlichen quer zur Längsrichtung des Grundriemens verlaufenden Stirnflächen des Klemmkörpers als Rundung ausgebildet ist, wobei der Radius der Rundung im Wesentlichen der Hälfte der Axiallänge des Klemmkörpers entspricht.

Der Klemmkörper ist mit der Befestigungsvorrichtung beispielsweise kraftschlüssig verbunden, so dass im Wesentlichen die Haftreibung den Klemmkörper in der den Riemen einspannenden Befestigungsvorrichtung hält. Zur Erhöhung der Haltekraft sieht die Erfindung in weiterer Ausgestaltung des Riemens vor, dass der Klemmkörper auf zumindest einer seiner beiden parallel zur Längsrichtung des Grundriemens verlaufenden Seitenflächen eine Aussparung und/oder einen hervorstehenden Ansatz aufweist, durch die/den der Klemmkörper formschlüssig mit der Befestigungsvorrichtung verbunden werden kann.

Dabei ist es in konstruktiver Ausgestaltung des Klemmkörpers von Vorteil, wenn der wenigstens eine Ansatz kreisförmig ausgebildet ist, wobei der Radius des kreisförmigen Ansatzes kleiner als die Hälfte der Breite des Klemmkörpers ist.

Eine konstruktiv besonders einfache Art der Fixierung des Riemens besteht darin, das Riemenende als Schlaufe auszubilden, die von beispielsweise einem Bolzenelement gehalten ist. Hierzu sieht die Erfindung in Weiterbildung vor, dass die Riemenendbefestigung im Bereich zumindest eines der beiden Längsenden des Grundriemens zwei beabstandet zueinander an dem Grundriemen angeordnete Klemmkörper umfasst, die jeweils zumindest eine ebene Auflagefläche aufweisen, wobei der den Abstand zwischen den zwei Klemmkörpern definierende Längsabschnitt des Grundriemens derart bemessen ist, dass die Auflageflächen der Klemmkörper auf- und übereinanderliegend anordbar sind und dabei der Längsabschnitt zu einer Schlaufe gebogen ist.

Die beiden auf- und übereinanderliegend angeordneten Klemmkörper können dann beispielsweise miteinander durch eine stoffschlüssige Verbindung verbunden werden. Denkbar ist es aber auch, dass die Riemenendbefestigung ferner ein Gehäuse umfasst, in welchem die beiden auf- und übereinanderliegend angeordneten Klemmkörper lagefest fixiert sind.

Wie mit Bezug auf das erfindungsgemäße Verfahren bereits ausgeführt, ist es in Bezug auf eine einfache und kostengünstige Herstellung des Riemens mit Riemenendbefestigung vorteilhaft, wenn der Klemmkörper der Riemenendbefestigung im Spritzgussverfahren durch Umspritzung des Grundriemens gebildet ist.

Alternativ dazu ist in Ausgestaltung des erfindungsgemäßen Riemens vorgesehen, dass der Klemmkörper der Riemenendbefestigung aus wenigstens zwei schalenartigen Klemmelementen gebildet ist, wobei nach Herstellung des Grundriemens unter Einsatz eines Lösungsmittels zum Anlösen des Materials des Grundriemens und der Klemmelemente und durch Erwärmung und Druckeinwirkung das Material der Klemmelemente mit dem Material des Grundriemens derart eine stoffschlüssige Verbindung eingeht, dass der Grundriemen und die Klemmelemente des Klemmkörpers einen einstückig und einteilig ausgebildeten Riemen bilden.

In Weiterbildung des erfindungsgemäßen Riemens ist weiter vorgesehen, dass die wenigstens zwei schalenartigen Klemmelemente zumindest ein Bodenteil, welches zwei Seitenwandabschnitte und einen die zwei Seitenwandabschnitte verbindenden Bodenabschnitt aufweist, und ein Deckelteil, welches zwischen die Seitenwandabschnitte einbringbar ist, umfasst, wobei zwischen dem Bodenteil und dem Deckelteil der Grundriemen angeordnet ist. Das Bodenteil und das Deckelteil stellen somit die Riemeneinfassung dar, wobei das Innenleben von Boden- und Deckelteil an das Profil des Riemens angepasst ist, um diesen formschlüssig einzufassen.

Um ein Verrutschen von Boden- und Deckelteil während des Einfassens des Grundriemens und des stoffschlüssigen Verbindens von Boden- und Deckelteil mit dem Grundriemen zu verhindern, ist in weiterer Ausgestaltung des Riemens vorgesehen, dass das Deckelteil seitliche Auskragungen aufweist, die bei Herstellung des Klemmkörpers der Riemenendbefestigung mit komplementär in den Seitenwandabschnitten des Bodenteils ausgebildeten Ausnehmungen in Eingriff stehen.

Bei sehr hohen Belastungsanforderungen sind die Riemen häufig als ein Verbund von zugfester Einlage, welche dann hauptsächlich zur Zugkraftübertragung beiträgt, und umgebenden biegeweichen Körper aufgebaut. Hierzu ist in Ausgestaltung des erfindungsgemäßen Riemens vorgesehen, dass der Grundriemen eine Armierungseinlage aufweist und als ein Flachriemen oder Zahnriemen ausgebildet ist.

Zur Bildung des biegeweichen Körpers sieht die Erfindung in Ausgestaltung ferner vor, dass der Grundriemen und/oder der Klemmkörper aus einem thermoplastischen Elastomer, vorzugsweise auf Urethanbasis, gebildet sind. Alternativ kommen zahlreiche Elastomere in Betracht, wobei diese eine Shore-Härte von beispielsweise 92 aufweisen können. Erfindungswesentlich ist, dass die verwendeten Materialien bzw. Werkstoffe für den Grundriemen und den Klemmkörper eine chemische Verbindung eingehen können, die einen Stoffschluss mit einer übergangslosen Fügestelle ermöglicht. Die erfindungsgemäß vorgesehene stoffliche Verbindung steht damit im Gegensatz zu üblichen Klebeverbindungen, bei denen das Klebemittel die Verbindung zwischen den zu verbindenden Körpern darstellt.

Um die Festigkeit des Riemens weiter zu erhöhen, sieht die Erfindung in weiterer Ausgestaltung vor, dass in dem Material des Grundriemens und/oder des Klemmkörpers zur Materialverstärkung ein Glasfaser- oder Kohlefasermaterial eingebracht ist oder Nanoröhren eingebracht sind.

In Ausgestaltung des Riemeneinspannsystems ist ferner erfindungsgemäß vorgesehen, dass die Befestigungsvorrichtung als Spannvorrichtung ausgebildet ist, die die Riemenendbefestigung in kraftschlüssiger und formschlüssiger Weise einspannt und die wenigstens eine Anschlagkante zur formschlüssigen Verbindung mit dem Klemmkörper der Riemenendbefestigung bereitstellt. Zusätzlich zu der formschlüssigen Verbindung, die im Wesentlichen auf der Haftreibung zwischen Spannvorrichtung und Klemmkörper basiert, wird damit ein Kraftschluss zwischen Spannvorrichtung und Klemmkörper bewirkt.

Konstruktiv besonders einfach ist es, wenn in Ausgestaltung des Riemeneinspannsystems die Spannvorrichtung von wenigstens zwei plattenförmigen und aneinander fixierbaren Spannelementen gebildet ist, zwischen denen der Klemmkörper der Riemenendbefestigung eingefasst und gehalten ist. Die plattenförmigen Spannelemente werden hierbei mittels Verschraubung aneinander befestigt und spannen den Klemmkörper des Riemens ein.

Um die Anzahl an Bauteilen möglichst gering zu halten, sieht die Erfindung in alternativer Ausgestaltung des Riemeneinspannsystems vor, dass die Spannvorrichtung als hülsenartiges Klemmgehäuse ausgebildet ist, das stirnseitig eine Durchtrittsöffnung für den Grundriemen aufweist und in das der Klemmkörper der Riemenendbefestigung in formschlüssiger und kraftschlüssiger Weise einbringbar ist.

Für ein Riemeneinspannsystem, welches besonders hohen Belastungen standhält, ist es besonders von Vorteil, wenn das Riemeneinspannsystem einen Riemen mit den wie vorstehend beschriebenen Merkmalen aufweist.

Um den Einbauraum bzw. die äußeren Abmessungen der Spannvorrichtung gering zu halten, sieht die Erfindung in weiterer Ausgestaltung des Riemeneinspannsystems vor, dass die Höhe des Klemmkörpers der Riemenendbefestigung wenigstens die Hälfte der Höhe der Spannvorrichtung aufweist.

Ebenso ist es in Bezug auf eine kompakte Bauweise von Vorteil, wenn die Axiallänge der Spannvorrichtung wenigstens dem Doppelten der Axiallänge des Klemmkörpers der Riemenendbefestigung entspricht.

Auch ist es für eine kompakte Bauweise des Riemeneinspannsystems auch von Vorteil, wenn die Breite der Spannvorrichtung wenigstens der Breite des Klemmkörpers der Riemenendbefestigung entspricht.

Schließlich sieht die Erfindung in Ausgestaltung des Riemeneinspannsystems vor, dass die Riemenendbefestigung im Bereich zumindest eines der beiden Längsenden des Grundriemens zwei beabstandet zueinander an dem Grundriemen angeordnete Klemmkörper umfasst, die jeweils zumindest eine ebene Auflagefläche aufweisen, wobei der den Abstand zwischen den zwei Riemenendbefestigungen definierende Längsabschnitt des Grundriemens derart bemessen ist, dass die Auflageflächen der Klemmkörper auf- und übereinanderliegend anordbar sind und dabei der Längsabschnitt zu einer Schlaufe gebogen ist, und wobei die Befestigungsvorrichtung als Bolzenelement ausgebildet ist, das durch die Schlaufe hindurch geführt ist und den Riemen fixiert.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Der Rahmen der Erfindung ist nur durch die Ansprüche definiert.

Weitere Einzelheiten, Merkmale und Vorteile des Gegenstandes der Erfindung ergeben sich aus der nachfolgenden Beschreibung im Zusammenhang mit der Zeichnung, in der beispielhafte Ausführungsbeispiele der Erfindung dargestellt sind. In der Zeichnung zeigt:
Figur 1 ein Riemeneinspannsystem gemäß einer ersten Ausführungsform in perspektivischer Ansicht,
Figur 2 ein plattenförmig ausgebildetes Spannelement einer Spannvorrichtung des Riemeneinspannsystems in perspektivischer Ansicht,
Figur 3 ein Riemenende mit Riemenendfestigung, die einen stoffschlüssig mit einem Grundriemen verbundenen Klemmkörper aufweist,
Figur 4 das Riemeneinspannsystem aus Figur 1 in einer seitlichen Schnittansicht,
Figur 5 das Riemeneinspannsystem aus Figur 1 in einer Draufsicht,
Figur 6 das plattenförmig ausgebildete Spannelement aus Figur 2 in seitlicher Schnittansicht,
Figur 7 eine alternative Ausgestaltung des Klemmkörpers der Riemenendbefestigung,
Figur 8 eine weitere alternative Ausgestaltung des Klemmkörpers,
Figur 9 eine noch weitere alternative Ausgestaltung des Klemmkörpers,
Figur 10 eine weitere alternative Ausgestaltung des Klemmkörpers,
Figur 11 eine denkbare weitere Ausgestaltung des Klemmkörpers,
Figur 12 ein aus einem Bodenteil und einem Deckelteil gebildeten Klemmkörper,
Figur 13 das Bodenteil des in Figur 12 gezeigten Klemmkörpers,
Figur 14 das Deckelteil des in Figur 12 gezeigten Klemmkörpers,
Figur 15 eine alternative Ausgestaltung des aus Boden- und Deckelteil gebildeten Klemmkörpers,
Figur 16 das Bodenteil des in Figur 15 gezeigten Klemmkörpers,
Figur 17 das Deckelteil des in Figur 15 gezeigten Klemmkörpers,
Figur 18 eine alternative Ausgestaltung des aus Boden- und Deckelteil gebildeten Klemmkörpers,
Figur 19 das Bodenteil des in Figur 18 gezeigten Klemmkörpers,
Figur 20 das Deckelteil des in Figur 18 gezeigten Klemmkörpers,
Figur 21 eine alternative Ausgestaltung des aus Boden- und Deckelteil gebildeten Klemmkörpers,
Figur 22 das Bodenteil des in Figur 21 gezeigten Klemmkörpers,
Figur 23 das Deckelteil des in Figur 21 gezeigten Klemmkörpers,
Figur 24 ein erfindungsgemäßes Riemeneinspannsystem gemäß einer zweiten Ausführungsform in perspektivischer Ansicht,
Figur 25 ein erfindungsgemäßer Riemen für das in Figur 24 dargestellte Riemeneinspannsystem in Perspektivansicht,
Figur 26 das in Figur 25 dargestellte Riemeneinspannsystem in einer Schnittansicht,
Figur 27 das in Figur 24 dargestellte Riemeneinspannsystem in einer seitlichen Schnittansicht,
Figur 28 eine Spannvorrichtung des Riemeneinspannsystems aus Figur 24 in einer seitlichen Schnittansicht
Figur 29 eine Frontalansicht auf das Riemeneinspannsystem aus Figur 24,
Figur 30 einen Riemen gemäß einer alternativen Ausführungsform in Seitenansicht,
Figur 31 den in Figur 30 gezeigten Riemen, bei dem zwei Klemmkörper übereinanderliegend angeordnet sind, und
Figur 32 den in Figur 31 dargestellten Riemen in einer perspektivischen Ansicht.

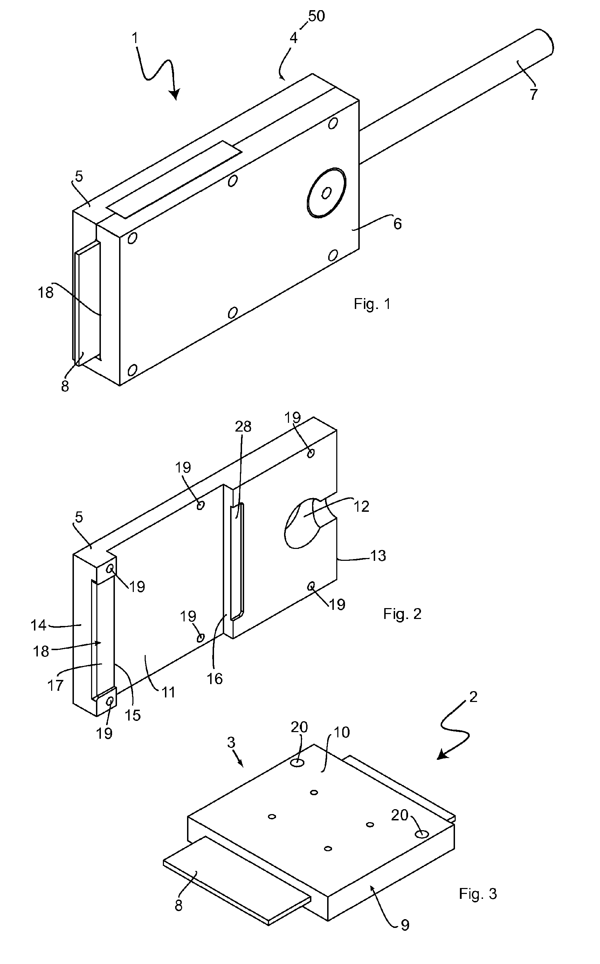

Ein Riemeneinspannsystem 1 eines Linearantriebs gemäß einer ersten Ausführungsform der Erfindung ist in Figur 1 dargestellt. Das Riemeneinspannsystem 1 umfasst einen endlichen Riemen 2, von dem ein Längsende 3 in Figur 3 dargestellt ist, und eine das Längsende 3 des Riemens 2 haltende Befestigungsvorrichtung 50, die als Spannvorrichtung 4 ausgebildet ist. Die Spannvorrichtung 4 ist gemäß der ersten Ausführungsform des Riemeneinspannsystems 1 von zwei plattenförmigen Spannelementen 5 und 6 gebildet. Zwischen den Spannelementen 5 und 6 ist das Längsende 3 des Riemens 2 eingefasst. Das Riemeneinspannsystem 1 umfasst ferner einen Zuganker 6, der dazu dient, eine vorbestimmte Spannung im Riemen 2 zu erzeugen. Der Riemen 2 weist eine endliche Länge auf und umfasst, wie in Figur 3 dargestellt ist, einen Grundriemen 8, der im Bereich seines Längsendes 3 an der Spannvorrichtung 4 einspannbar oder einklemmbar ist. Damit der Grundriemen 8 von der Spannvorrichtung 4 sicher eingefasst werden kann, weist der Grundriemen 8 eine Riemenendbefestigung 9 auf. Die Riemenendbefestigung 9 selbst umfasst einen mit dem Grundriemen 8 einstückig ausgebildeten Klemmkörper 10, der mit dem Grundriemen 8 stoffschlüssig verbunden ist, wobei die für den Grundriemen 8 und den Klemmkörper 10 verwendeten Materialien zwar nicht identisch, jedoch eine Materialbeschaffenheit aufweisen müssen, dass der Grundriemen 8 und der Klemmkörper 10 eine homogene Einheit bilden und den Riemen 2 als einstückigs und einteiliges Bauteil ausbilden. In dem dargestellten Ausführungsbeispiel ist der Klemmkörper 10 quaderförmig ausgebildet und vollumfänglich um einen Längsabschnitt des Grundriemens 8 herum angeordnet.

In Figur 2 ist eine perspektivische Ansicht eines der beiden Spannelemente 5, 6 der Spannvorrichtung 4 dargestellt. Zur Reduzierung der Herstellungskosten sind die beiden Spannelemente 5, 6 als identische Bauteile ausgeführt. Daher beziehen sich die nachstehend auf das Spannelement 5 bezogenen Ausführungen selbstverständlich auch auf das Spannelement 6. Das plattenförmig ausgebildete Spannelement 5 weist auf einer seiner beiden Seitenflächen eine Aussparung 11 auf, in welcher der Klemmkörper 10 der Riemenendbefestigung 9 zur Einspannung bzw. Einfassung des Riemens 2 eingebracht ist. Ferner weist das Spannelement 5 eine zur Aufnahme des Zugankers 7 bestimmte Ausnehmung 12 an einer ersten Stirnseite 13 auf. An der gegenüberliegenden Stirnseite 14 bildet eine die Aussparung 11 begrenzende Kante eine Art Anschlagkante 15 für den Klemmkörper 10. Durch eine zweite, die Aussparung 11 begrenzende Kante 16 ist der Klemmkörper 10 formschlüssig in der Spannvorrichtung 4 gehalten. Dabei weist die Anschlagkante 15 eine Ausnehmung 17 auf, die nach Einfassung des Klemmkörpers 10 des Riemens 2 bei Fixierung der beiden Spannelemente 5 und 6 eine Durchtrittsöffnung 18 ausbildet, durch die hindurch der Grundriemen 8 aus der Spannvorrichtung 4 herausragt. Das Spannelement 5 weist ferner mehrere Langlöcher 19 auf, durch die nicht dargestellte Arretierschrauben hindurchgeführt werden, wodurch der Klemmkörper 10 zwischen den Spannelementen 5 und 6 eingefasst und gehalten ist. Einige der Arretierschrauben können zusätzlich durch in dem Klemmkörper 10 ausgebildete Langlöcher 20 hindurchgeführt werden, um den Klemmkörper 10 zusätzlich zu sichern, wobei die Langlöcher 20 nicht durch den Grundriemen 8 hindurch führen, sondern seitlich davon im Klemmkörper 10 ausgebildet sind.

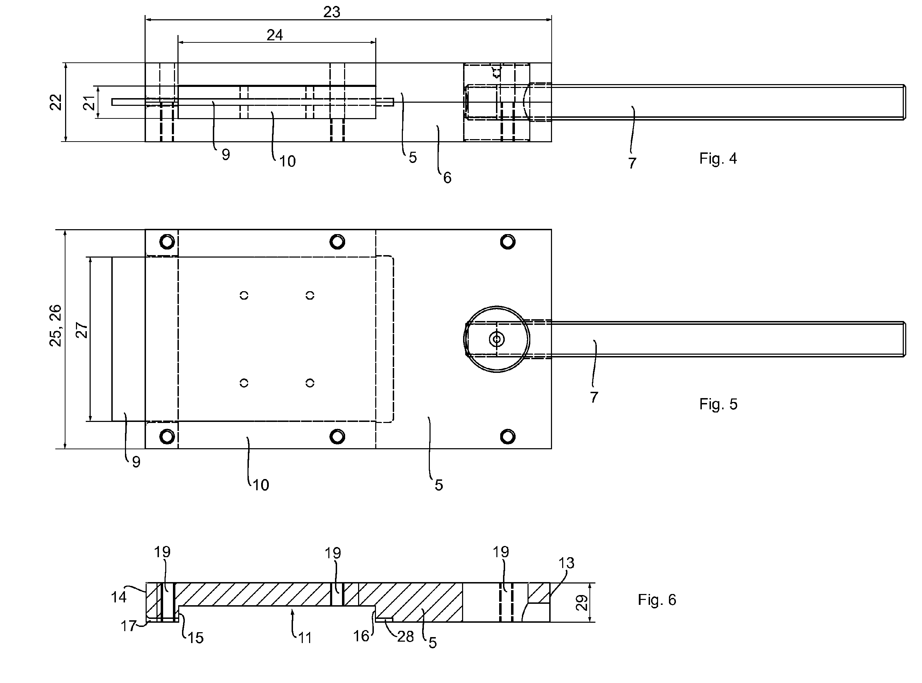

In den Figuren 4 und 5 ist das Riemeneinspannsystem 1 gemäß der ersten Ausführungsform in einer Schnittansicht bzw. in einer Draufsicht dargestellt, wohingegen Figur 6 das plattenförmig ausgebildete Spannelement 5 in seitlicher Schnittansicht zeigt. Die Figuren 4 bis 6 vermitteln konstruktive Ausgestaltungen der einzelnen Bauteile des Riemeneinspannsystems 1. Wie aus Figur 4 ersichtlich ist, weist der Klemmkörper 10 eine größere Höhe 21 als der Grundriemen 8 auf. Ferner beträgt die Höhe 21 des Klemmkörpers 10 wenigstens die Hälfte der Höhe 22 der Spannvorrichtung 4, wenn die beiden Spannelemente 5 und 6 aneinander befestigt bzw. gegeneinander verschraubt sind. Darüber hinaus entspricht die Axiallänge 23 der Spannvorrichtung 4 bzw. der Spannelemente 5 und 6 wenigstens dem Doppelten der Axiallänge 24 des Klemmkörpers 10. In dem dargestellten Ausführungsbeispiel entspricht die Breite 25 der Spannvorrichtung 4 im Wesentlichen der Breite 26 des Klemmkörpers 10 der Riemenendbefestigung 9, wobei es auch denkbar wäre, dass entweder der Klemmkörper 10 eine größere Breite 26 als die Spannvorrichtung 4 aufweist, so dass der Klemmkörper 10 seitlich aus der Spannvorrichtung 4 hervorsteht, oder aber dass die Breite 26 des Klemmkörpers 10 geringer ist als die der Spannvorrichtung 4. Wesentlich ist, dass die Breite 26 des Klemmkörpers 10 größer ist als die Breite 27 des Grundriemens 8, damit dieser von dem Klemmkörper 10 vollumfänglich eingefasst wird. In Figur 6 sind nochmals die wesentlichen konstruktiven Merkmale des Spannelements 5 dargestellt, die vorstehend mit Bezug auf Figur 2 beschrieben wurden. Die Höhe 29 des Spannelements 4 ist in dem dargestellten Ausführungsbeispiel kleiner als die Höhe 21 des Klemmkörpers 10. Um das aus dem Klemmkörper 10 hervorstehende Riemenende aufzunehmen, weist das Spannelement 5 eine weitere Ausnehmung 28 auf, die sich an die Aussparung 11 mit geringerer Dimensionierung anschließt.

Erfindungsgemäß wird bei der Herstellung des Riemens 2 der Klemmkörper 10 der Riemenendbefestigung 9 stoffschlüssig mit dem Grundriemen 8 verbunden und umgibt einen Endabschnitt des Grundriemens 8 vollumfänglich.

Dabei ist es denkbar, dass die stoffschlüssige Verbindung zwischen dem Klemmkörper 10 der Riemenendbefestigung 9 und dem Grundriemen 8 erst nach Herstellung des Grundriemens 8 erfolgt. Hierzu wird das Längsende 3 des Grundriemens 8 beispielsweise in eine Spritzform eingelegt. Zur Ausbildung des Klemmkörpers 10 wird dann das in die Spritzform bzw. Formwerkzeugs eingelegte Längsende 3 des Grundriemens 8 mit einem den Klemmkörper 10 formenden Material umfangsmäßig umspritzt. Durch die Temperatur des zur Umspritzung verwendeten Materials wird die Oberfläche des Grundriemens 8 angelöst, so dass die angelöste Oberfläche des Grundriemens 8 und das umspritzte Material nach Abkühlung eine übergangslose bzw. nahtlose und damit stoffschlüssige Verbindung aufweisen. Dementsprechend sieht ein entsprechendes Verfahren zur Herstellung des erfindungsgemäßen Riemens 2 vor, dass zumindest ein Längsende 3 des Grundriemens 8 im erwärmten Zustand mit einem Material umspritzt wird, wodurch an diesem Längsende 3 der Klemmkörper 10 vollumfänglich mit Bezug auf den Grundriemen 8 angeformt wird und nach Abkühlung des Materials ein einteiliger und einstückiger Grundriemen 8 mit Klemmkörper 10 vorliegt.

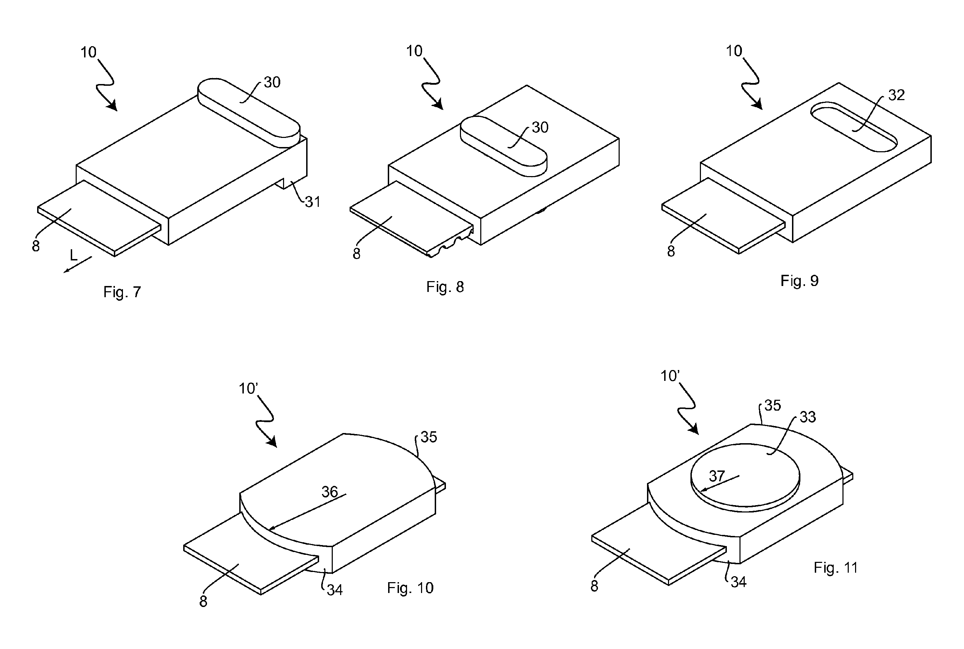

Denkbare Ausgestaltungen des auf diese Weise stoffschlüssig mit dem Grundriemen 8 verbundenen Klemmkörpers 10 sind in den Figuren 7 bis 11 dargestellt. Die quaderförmige Grundgestalt des Klemmkörpers 10 ist auch in den alternativen Ausgestaltungen der Figuren 7 bis 9 vorhanden, wobei diese Ausführungsformen des Klemmkörpers 10 zusätzlich auf zumindest einer der beiden parallel zur Längsrichtung L des Grundriemens 8 verlaufenden Seitenflächen jeweils einen Ansatz 30 bzw. 31 und/oder eine Aussparung 32 aufweisen. In den Figuren 7 und 8 ist der Ansatz 30 mit Rundungen ausgeführt und erstreckt sich über die gesamte Breite des Klemmkörpers 10, wobei der Ansatz 30 in Figur 7 im Bereich einer Stirnseite des Klemmkörpers 10 ausgebildet ist, wohingegen der in Figur 9 dargestellte und an dem Klemmkörper 10 angeformte Ansatz 30 zentral auf der Seitenfläche des Klemmkörpers 10 angeordnet ist. Alternativ zu einer Rundung kann der Ansatz 31 auch eckig ausgebildet sein, wie es in Figur 7 dargestellt ist. Es sind demnach beliebige Kombinationen und Anordnungen der Ansätze 30 und 31 denkbar. Demgegenüber zeigt Figur 9 eine in dem Klemmkörper 10 ausgebildete Aussparung 32, die optional auch auf der Unterseite oder zentral auf den Seitenflächen ausgebildet und mit oder ohne Rundung ausgeführt sein kann. Die Ansätze 30, 31 und die Aussparung bzw. Ausnehmung 32 dienen dazu, eine formschlüssige Verbindung zwischen Riemen 2 und Spannvorrichtung 4 zu bilden, indem die Aussparung 11 in dem Spannelement 5 bzw. 6 der Spannvorrichtung 4 komplementär ausgeführt ist. Ohne die konstruktiven Ausgestaltungen von Ansatz und Ausnehmung würde lediglich eine kraftschlüssige Verbindung der Seitenflächen des Klemmkörpers 10 mit der Spannvorrichtung 4 vorliegen. In den Figuren 10 und 11 weicht die Gestalt des dargestellten Klemmkörpers 10' von der strengen Definition eines Quaders ab, denn der Klemmkörper 10' weist abgerundete Stirnflächen 34 und 35 auf. Die als Rundung ausgebildeten Stirnflächen 34 und 35 sind mit einem Radius 36 ausgebildet, der im Wesentlichen der Hälfte der Axiallänge 24 des Klemmkörpers 10 bzw. 10' entspricht. Die abgerundeten Stirnflächen 34, 35 dienen dazu, eine Schiefstellung der Spannvorrichtung 4 mit Bezug auf die eigentliche Riemenausrichtung im Betrieb auszugleichen. Der in Figur 11 dargestellte Klemmkörper 10' weist neben den abgerundeten Stirnflächen 34, 35 zumindest auf seiner Oberseite einen kreisförmig ausgebildeten Ansatz 33 auf. Dabei ist der Radius 37 des kreisförmigen Ansatzes 33 in jedem Fall kleiner als die Hälfte der Breite 26 des Klemmkörpers 10 bzw. 10'.

Die in den Figuren 3 und 7 bis 11 dargestellten Ausführungsformen des Klemmkörpers 10 und 10' können im Spritzgussverfahren durch vollumfängliches Umspritzen des Grundriemens 8 an dessen Längsende 3 gebildet werden, wobei die in den Figuren 7 bis 11 dargestellten konstruktiven Merkmale der Ansätze 30, 31, 33 und der Aussparung 32 sowie der abgerundeten Stirnflächen 34, 35 dazu dienen, dass der Klemmkörper 10, 10' formschlüssig mit der Spannvorrichtung 4 verbunden wird. Es versteht sich, dass die in den Figuren 7 bis 11 dargestellten Merkmale selbstverständlich bei der Ausgestaltung der Innenseite der Spannelemente 5 und 6 Berücksichtigung finden müssen, um den gewünschten Formschluss zu verwirklichen. Somit ist bei solchen Ausgestaltungen des Klemmkörpers 10, 10' darauf zu achten, dass die Aussparung 11 der Spannelemente 5, 6 komplementär zu der Form des Klemmkörpers 10, 10' ausgebildet ist.

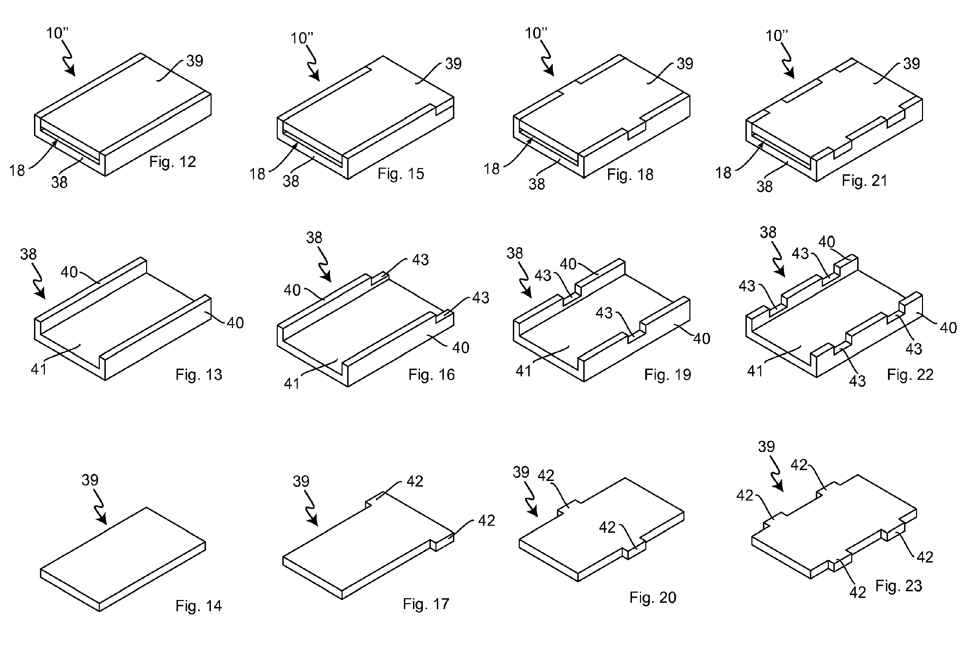

In den Figuren 12, 15, 18 und 21 sind alternative Ausgestaltungen eines Klemmkörpers 10" der Riemenendbefestigung 9 dargestellt. Der Klemmkörper 10" ist aus wenigstens zwei schalenartigen Klemmelementen 38 und 39 gebildet, wobei das Klemmelement 38 einem Bodenteil und das Klemmelement 39 einem Deckelteil entspricht. Dieser Klemmkörper 10" wird durch ein alternatives Verfahren hergestellt, bei welchem nach Herstellung des Grundriemens 8 die zu verbindenden Oberflächen des Grundriemens 8 und der Klemmelemente bzw. des Boden- und Deckelteils 38, 39 mittels eines Lösungsmittels angelöst und unter Erwärmung zur Bildung der Riemenendbefestigung 9 zusammengelegt werden. Anschließend werden die zu verbindenden Oberflächen unter Druckeinwirkung für eine vorbestimmte Zeitdauer zusammengehalten. Nach Ablauf dieser vorbestimmten Zeitdauer ist das Lösungsmittel zwischen den zu verbindenden Oberflächen verdampft und es bildet sich eine stoffschlüssige Verbindung zwischen dem Grundriemen 8 und den Klemmelementen 38, 39, wobei die stoffschlüssige Verbindung materialmäßig derart eine homogene Einheit bildet, dass der Grundriemen 8 und die Klemmelemente 38, 39 des Klemmkörpers 10" einen einstückig und einteilig ausgebildeten Riemen 2 bilden. Die Darstellungen der Figuren 12 bis 23 sind lediglich exemplarisch gewählt und zeigen einen im Wesentlichen quaderförmigen Klemmkörper 10''. Zusätzlich ist es denkbar, die in den Figuren 7 bis 11 dargestellten konstruktiven Merkmale von Ansatz und Aussparung sowie abgerundeten Stirnflächen auch auf die Ausführungsform des Klemmkörpers 10" mit wenigstens zwei Klemmteilen 38, 39 zu übertragen.

Die Figuren 12, 15, 18 und 21 zeigen verschiedene Ausführungsformen des zweiteiligen Klemmkörpers 10'', der von dem Bodenteil 38 und dem Deckelteil 39 gebildet wird. Verschiedene Ausführungsformen eines Bodenteils 38 sind in den Figuren 13, 16, 19 und 22 dargestellt, wohingegen die Figuren 14, 17, 20 und 23 komplementär und entsprechend zu den jeweiligen Bodenteilen 38 ausgebildete Deckelteile 39 darstellen. Das Bodenteil 38 umfasst zwei Seitenwandabschnitte 40 und einen die zwei Seitenwandabschnitte 40 verbindenden Bodenabschnitt 41, wobei das Deckelteil 39 zwischen die Seitenwandabschnitte 40 einbringbar ist. Nach Herstellung des Klemmkörpers 10" weist dieser an einer der beiden Stirnflächen die Durchtrittsöffnung 18 für den Grundriemen 8 auf, der in den Figuren 12 bis 23 aus Gründen einer besseren Übersichtlichkeit ausgelassen wurde. Dennoch sei erwähnt, dass das Längsende 3 des Grundriemens 8 zwischen dem Bodenteil 38 und dem Deckelteil 39 zur Herstellung des Klemmkörpers 10" der Riemenendbefestigung 9 vollumfänglich eingefasst wird. Ohne im Detail auf die einzelnen, in den Figuren 12 bis 23 dargestellten Ausgestaltungen von Boden- und Deckelteil 38, 39 einzugehen, ist ersichtlich, dass das Deckelteil 39 seitliche Auskragungen 42 aufweisen kann, die bei Herstellung des einstückigen Klemmkörpers 10" mit eingefassten Grundriemen 8 mit komplementär in den Seitenwandabschnitten 40 des Bodenteils 38 ausgebildete Ausnehmungen 43 in ein Eingriff stehen. Beispielsweise ist der in Figur 18 dargestellte Klemmkörper 10" aus dem Bodenteil 38 in Figur 19 und dem Deckelteil 39 aus Figur 20 gebildet, wobei der Deckelteil 39 zwei seitliche Auskragungen 42 aufweist, die in die zwei komplementär und zentral auf den beiden Seitenwänden 40 ausgebildeten Ausnehmungen 43 in Eingriff gebracht werden.

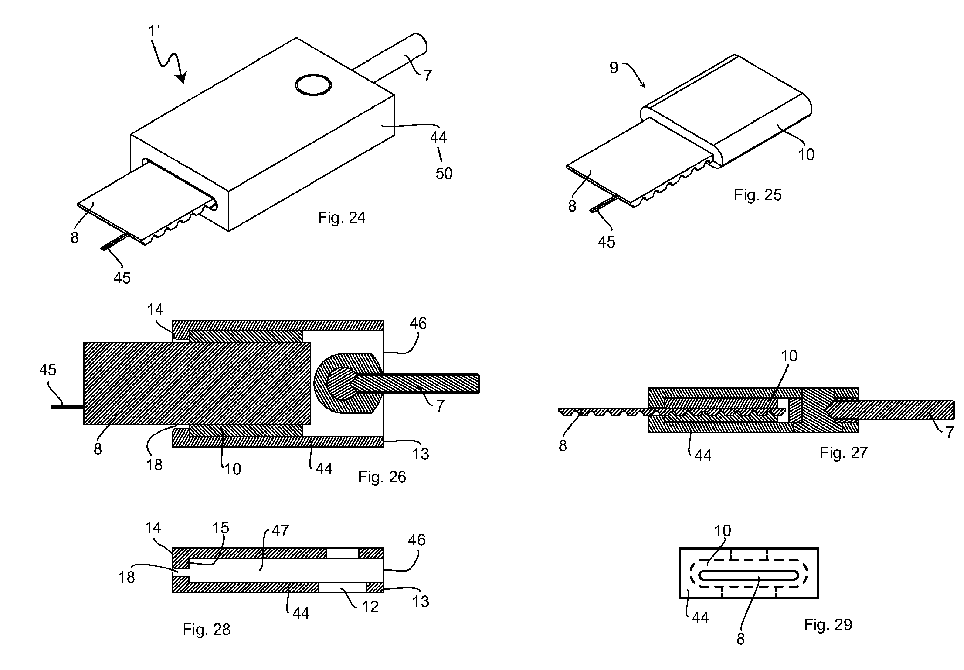

In den Figuren 24 bis 29 ist ein Riemeneinspannsystem 1' gemäß einer zweiten Ausführungsform dargestellt, bei welcher die Befestigungsvorrichtung 50 als hülsenartiges Klemmgehäuse 44 ausgebildet ist. Gegenüber der ersten Ausführungsform ist die Befestigungsvorrichtung 50 nun nicht mehr zweiteilige Spannvorrichtung 4, sondern einteilig in Form des Klemmgehäuses 44 ausgebildet. Wie ferner den Figuren 24 bis 29 zu entnehmen ist, ist der Grundriemen 8 als Zahnriemen ausgeführt. Er könnte aber auch wie in dem ersten Ausführungsbeispiel nach Art eines Flachriemens ausgebildet sein. Der als Zahnriemen ausgeführte Grundriemen 8 weist eine Armierungseinlage 45 in Form von Stahllitzen auf, von denen in den Figuren 24 bis 26 lediglich zwei Litzen exemplarisch dargestellt sind. Die Armierungseinlage 45 kann selbstverständlich auch Bestandteil des als Flachriemen ausgeführten Grundriemens sein.

Wie aus den Figuren 26 und 28 ersichtlich ist, weist das Klemmgehäuse 44 an der Stirnseite 14 die Durchtrittsöffnung 18 für den Durchtritt des Grundriemens 8 auf, wohingegen die gegenüberliegende Stirnseite 13 eine größer dimensionierte Öffnung 46 aufweist, durch die hindurch der Grundriemen 8 mitsamt dem Klemmkörper 10 in den Hohlraum 47 des Klemmgehäuses 44 in form- und kraftschlüssiger Weise eingebracht werden kann. Nachdem der Klemmkörper 10 in das Klemmgehäuse 44 eingebracht ist und bis an die Anschlagkante 15 geschoben ist, wird dann der Zuganker 7 an dem hülsenartigen Klemmgehäuse 44 montiert, so dass ein Herausgleiten des Riemens 2 bzw. des Klemmkörpers 10 verhindert wird. Die Dimensionierungen des Klemmgehäuses 44 und die Relationen von Breite, Axiallänge und Höhe zwischen dem Klemmkörper 10 und der in Form des Klemmgehäuses 44 ausgebildeten Befestigungsvorrichtung 50 sind identisch zu denen der ersten Ausführungsform, bei der die Befestigungsvorrichtung als zweiteilige Spannvorrichtung 4 ausgebildet ist, so dass von einer Beschreibung dieser Relationen zur Vermeidung von Wiederholungen abgesehen wird. Auch auf eine detaillierte Beschreibung des Klemmkörpers 10 wird verzichtet. Der in den Figuren 24 bis 29 dargestellte Klemmkörper 10 kann entweder durch Umspritzung des Grundriemens 8 hergestellt werden oder von zwei Klemmelementen 40, 41 gebildet werden, wie es für die in den Figuren 12 bis 23 gezeigten Ausführungsformen beschrieben wurde. Sollte der Klemmkörper 10 von zwei Klemmelementen 40, 41 gebildet werden, so ist aus Figur 27 ersichtlich, dass eines der beiden Klemmelemente bzw. der Bodenabschnitt 41 des Bodenteils 38 eine entsprechend dem Zahnprofil des Grundriemens 9 ausgebildete Kontur aufweisen muss, um eine form- und stoffschlüssige Verbindung zwischen Klemmkörper 10 und Grundriemen 9 zu ermöglichen.

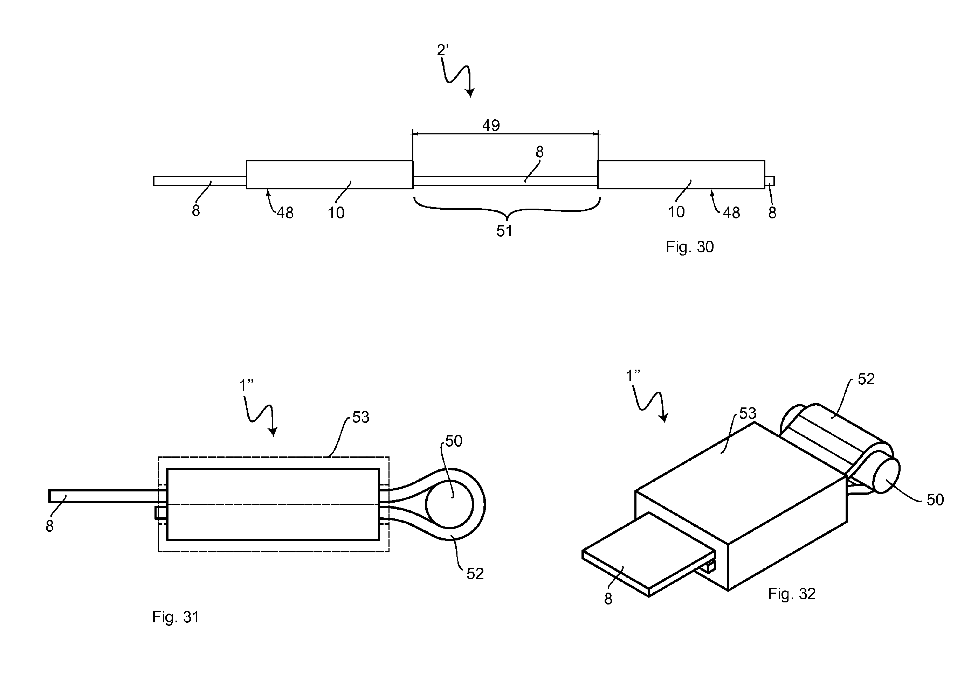

In den Figuren 30 bis 32 ist ein Riemeneinspannsystem 1'' und ein Riemen 2' gemäß alternativer Ausführungsformen dargestellt. Der in Figur 30 gezeigte Riemen 2' weist zwei voneinander beabstandete Klemmkörper 10 auf, die an dem Grundriemen 8 ausgebildet sind und die Riemenendbefestigung 9 bilden. In dem dargestellten Ausführungsbeispiel sind die beiden jeweils eine ebene bzw. flache Auflagefläche 48 aufweisenden Klemmkörper 10 in gleicher Gestalt ausgebildet. Denkbar ist, dass die Form der Klemmkörper 10 unterschiedlich ist. Der Abstand 49 zwischen den beiden in dem Längsendbereich des Riemens 2' angeordneten Klemmkörpern 10 entspricht in etwa der Axiallänge 24 eines einzigen Klemmkörpers 10, wobei der Abstand 49 zwischen den zwei Klemmkörpern 10 zumindest derart bemessen sein muss, dass die Auflageflächen 48 der Klemmkörper 10 auf-und übereinanderliegend anordbar sind und dabei der den Abstand 49 zwischen den zwei Klemmkörpern 10 definierende Längsabschnitt 51 des Grundriemens 8 zu einer Schlaufe 52 gebogen werden kann, wie in den Figuren 31 und 32 dargestellt ist. In dem gezeigten Ausführungsbeispiel entspricht der Abstand 49 im Wesentlichen der Axiallänge 24 des Klemmkörpers 10, wobei die Riemenendbefestigung 9 neben den beiden Klemmkörpern 10 zusätzlich ein Gehäuse 53 umfasst, welches die beiden auf- und übereinanderliegend angeordneten Klemmkörper 10 lagefest fixiert. Alternativ können die Klemmkörper 10 an ihren Auflageflächen 48 mittels einer stoffschlüssigen Verbindung aneinander fixiert sein, wodurch das Gehäuse 53 rein optional und entbehrlich ist. Zur Befestigung bzw. Anbringung des Riemens 1'' kann dann ein als die Befestigungsvorrichtung 50 dienendes Bolzenelement verwendet werden, welches durch die von dem Grundriemen 8 gebildete Schlaufe 52 hindurch geführt ist und den Riemen 1'' an seinem Längsende 3 fixiert.

Zusammenfassend zeichnet sich die vorstehend beschriebene Erfindung dadurch aus, dass der Grundriemen 9 zumindest im Bereich eines seiner beiden Längsenden 3 wenigstens eine an der Befestigungsvorrichtung 50 anbringbare Riemenendbefestigung 9 aufweist, die den mit dem Grundriemen 8 einstückig ausgebildeten Klemmkörper 10, 10', 10" umfasst, wobei der Klemmkörper 10, 10', 10'' um einen Längsabschnitt des Grundriemens 8 um diesen vollumfänglich herum angeordnet ist und mit dem Grundriemen 8 stoffschlüssig verbunden ist. Dabei können der Grundriemen 8 und der Klemmkörper 10, 10', 10" aus einem thermoplastischen Elastomer, vorzugsweise auf Urethanbasis, gebildet sein, so dass ein biegeweicher Riemen 1, 1' zur Verfügung steht. Zur Erhöhung der Festigkeit des Riemens 1, 1' kann in dem Material des Grundriemens 8 und/oder des Klemmkörpers 10, 10', 10" aus Gründen der Materialverstärkung ein Glasfaser- oder Kohlefasermaterial oder Nanoröhren können eingebracht sein.

Die stoffschlüssige Verbindung von Grundriemen 8 und Klemmkörper 10, 10', 10" ist weder als Klebung noch als Verschweißung zu verstehen. Vielmehr ist im Rahmen der vorliegenden Erfindung unter einer stoffschlüssigen Verbindung eine solche Verbindung zu verstehen, bei der keine Materialgrenzen oder Materialübergänge vorhanden sind, sondern bei denen ein fließender Materialübergang vorhanden ist. Dementsprechend könnte der Klemmkörper 10, 10', 10" theoretisch bei Fertigung des Grundriemens 8 direkt mit gefertigt werden.

Die vorstehend beschriebene Erfindung ist selbstverständlich nicht auf die beschriebenen und dargestellten Ausführungsformen beschränkt. An den in der Zeichnung dargestellten Ausführungsformen können zahlreiche, dem Fachmann entsprechend der beabsichtigten Anwendung naheliegende Abänderungen vorgenommen werden, ohne dass dadurch der Bereich der Erfindung verlassen wird. Dabei gehört zur Erfindung alles dasjenige, was in der Beschreibung enthalten und/oder in der Zeichnung dargestellt ist, einschließlich dessen, was abweichend von dem konkreten Ausführungsbeispielen für den Fachmann naheliegt.

## Patentansprüche

1. Riemen eines Linearantriebs, der einen an einer Befestigungsvorrichtung (50) anbringbaren Grundriemen (9) mit endlicher Riemenlänge aufweist,
**dadurch gekennzeichnet, dass**
der Grundriemen (8) zumindest im Bereich eines seiner beiden Längsenden (3) wenigstens eine zu seiner Anbringung dienende Riemenendbefestigung (9) aufweist, die zumindest einen mit dem Grundriemen (8) einstückig ausgebildeten und eine größere Höhe (21) als der Grundriemen (8) aufweisenden Klemmkörper (10, 10', 10") umfasst, der mit dem Grundriemen (8) stoffschlüssig verbunden ist.

2. Riemen nach Anspruch 1, **dadurch gekennzeichnet, dass** zumindest eine der beiden im Wesentlichen quer zur Längsrichtung (L) des Grundriemens (8) verlaufenden Stirnflächen (34, 35) des Klemmkörpers (10, 10', 10") als Rundung ausgebildet ist, wobei der Radius (36) der Rundung im Wesentlichen der Hälfte der Axiallänge (24) des Klemmkörpers (10, 10', 10'') entspricht.

3. Riemen nach einem der vorhergehenden Ansprüche, **dadurch gekennzeichnet, dass** der Klemmkörper (10, 10', 10") auf zumindest einer seiner beiden parallel zur Längsrichtung (L) des Grundriemens (8) verlaufenden Seitenflächen eine Aussparung (32) und/oder einen hervorstehenden Ansatz (30, 31) aufweist, durch die/den der Klemmkörper (10, 10', 10") formschlüssig mit der Befestigungsvorrichtung (50) verbunden werden kann.

4. Riemen nach Anspruch 1 oder 2, **dadurch gekennzeichnet, dass** die Riemenendbefestigung (9) im Bereich zumindest eines der beiden Längsenden (3) des Grundriemens (8) zwei beabstandet zueinander an dem Grundriemen (8) angeordnete Klemmkörper (10) umfasst, die jeweils zumindest eine ebene Auflagefläche (48) aufweisen, wobei der den Abstand (49) zwischen den zwei Klemmkörpern (10) definierende Längsabschnitt (51) des Grundriemens (8) derart bemessen ist, dass die Auflageflächen (48) der Klemmkörper (10) auf- und übereinanderliegend anordbar sind und dabei der Längsabschnitt (51) zu einer Schlaufe (52) gebogen ist.

5. Riemen nach einem der Ansprüche 1 bis 3, **dadurch gekennzeichnet, dass** der Klemmkörper (10, 10', 10'') der Riemenendbefestigung (9) aus wenigstens zwei schalenartigen Klemmelementen (38, 39) gebildet ist, wobei nach Herstellung des Grundriemens (8) unter Einsatz eines Lösungsmittels zum Anlösen des Materials des Grundriemens (8) und der Klemmelemente (38, 39) und durch Erwärmung und Druckeinwirkung das Material der Klemmelemente (38, 39) mit dem Material des Grundriemens (8) derart eine stoffschlüssige Verbindung eingeht, dass der Grundriemen (8) und die Klemmelemente (38, 39) des Klemmkörpers (10, 10', 10'') einen einstückig und einteilig ausgebildeten Riemen (2, 2') bilden.

6. Riemen nach Anspruch 5, **dadurch gekennzeichnet, dass** die wenigstens zwei schalenartigen Klemmelemente (38, 39) zumindest ein Bodenteil (38), welches zwei Seitenwandabschnitte (40) und einen die zwei Seitenwandabschnitt (40) verbindenden Bodenabschnitt (41) aufweist, und ein Deckelteil (39), welches zwischen die Seitenwandabschnitte (40) einbringbar ist, umfasst, wobei zwischen dem Bodenteil (38) und dem Deckelteil (39) der Grundriemen (8) angeordnet ist.

7. Riemen nach Anspruch 6, **dadurch gekennzeichnet, dass** das Deckelteil (39) seitliche Auskragungen (42) aufweist, die bei Herstellung des Klemmkörpers (10, 10', 10'') der Riemenendbefestigung (9) mit komplementär in den Seitenwandabschnitten (40) des Bodenteils (38) ausgebildeten Ausnehmungen (43) in Eingriff stehen.

8. Riemeneinspannsystem eines Linearantriebs, das einen Riemen (2, 2') und zumindest eine den Riemen (2, 2') haltende Befestigungsvorrichtung (50) umfasst, wobei der Riemen (2, 2') einen Grundriemen (8) mit endlicher Riemenlänge aufweist und wenigstens eines der beiden Längsenden (3) des Grundriemens (8) an der Befestigungsvorrichtung (50) anbringbar ist,
**dadurch gekennzeichnet, dass**
der Grundriemen (8) zumindest im Bereich eines seiner beiden Längsenden (3) wenigstens eine zu seiner Anbringung dienende Riemenendbefestigung (9) aufweist, die zumindest einen mit dem Grundriemen (8) einstückig ausgebildeten und eine größere Höhe (21) als der Grundriemen (8) aufweisenden Klemmkörper (10, 10', 10'') umfasst, der mit dem Grundriemen (8) stoffschlüssig verbunden ist.

9. Riemeneinspannsystem nach Anspruch 8, **dadurch gekennzeichnet, dass** die Befestigungsvorrichtung (50) als Spannvorrichtung (4) ausgebildet ist, die die Riemenendbefestigung in kraftschlüssiger und formschlüssiger Weise einspannt und die von wenigstens zwei plattenförmigen und aneinander fixierbaren Spannelementen (5, 6) gebildet ist, zwischen denen der Klemmkörper (10, 10', 10'') der Riemenendbefestigung (9) eingefasst und gehalten ist.

10. Riemeneinspannsystem nach Anspruch 8, **dadurch gekennzeichnet, dass** die Befestigungsvorrichtung (50) als hülsenartiges Klemmgehäuse (44) ausgebildet ist, das stirnseitig eine Durchtrittsöffnung (18) für den Grundriemen (8) aufweist und in das der Klemmkörper (10, 10', 10'') der Riemenendbefestigung (9) in formschlüssiger und kraftschlüssiger Weise einbringbar ist.

11. Riemeneinspannsystem nach Anspruch 9 oder 10, **dadurch gekennzeichnet, dass** die Höhe (21) des Klemmkörpers (10, 10', 10'') der Riemenendbefestigung (9) wenigstens die Hälfte der Höhe (21) der Spannvorrichtung (4) aufweist und/oder dass die Axiallänge (23) der Spannvorrichtung (4) wenigstens dem Doppelten der Axiallänge (24) des Klemmkörpers (10, 10', 10") der Riemenendbefestigung (9) entspricht.

12. Riemeneinspannsystem nach Anspruch 8, **dadurch gekennzeichnet, dass** die Riemenendbefestigung (9) im Bereich zumindest eines der beiden Längsenden (3) des Grundriemens zwei beabstandet zueinander angeordnete Klemmkörper (10) umfasst, die jeweils zumindest eine ebene Auflagefläche (48) aufweisen, wobei der den Abstand (49) zwischen den zwei Klemmkörpern (10) definierende Längsabschnitt (51) des Grundriemens (8) derart bemessen ist, dass die Auflageflächen (48) der Klemmkörper (10) auf- und übereinanderliegend anordbar sind und dabei der Längsabschnitt (51) zu einer Schlaufe (52) gebogen ist, und wobei die Befestigungsvorrichtung (50) als Bolzenelement ausgebildet ist, das durch die Schlaufe (52) hindurch geführt ist und den Riemen (2') fixiert

13. Verfahren zur Herstellung eines Riemens (2, 2') eines Linearantriebs, der einen Grundriemen (8) mit endlicher Riemenlänge aufweist, der an einer Befestigungsvorrichtung (50) anbringbar ist, wobei der Grundriemen (8) zumindest im Bereich eines seiner beiden Längsenden (3) wenigstens eine an der Befestigungsvorrichtung (50) fixierbare Riemenendbefestigung (9) mit einem Klemmkörper (10, 10', 10") aufweist,
**dadurch gekennzeichnet, dass**
zur Herstellung des von Grundriemen (8) und Riemenendbefestigung (9) gebildeten Riemens (2, 2') der Klemmkörper (10, 10', 10") der Riemenendbefestigung (9) stoffschlüssig mit dem Grundriemen (8) verbunden wird.

14. Verfahren nach Anspruch 13, **dadurch gekennzeichnet, dass** die stoffschlüssige Verbindung zwischen dem Klemmkörper (10, 10', 10'') der Riemenendbefestigung (9) und dem Grundriemen (8) nach Herstellung des Grundriemens (8) hergestellt wird, indem das Längsende des Grundriemens (8) in eine Spritzform eingelegt wird und zur Ausbildung des Klemmkörpers (10) ein Abschnitt des Längsendes (3) des Grundriemens (8) mit einem den Klemmkörper (10) formenden Material umfangsmäßig umspritzt wird, wobei durch die Temperatur des zur Umspritzung verwendeten Materials die Oberfläche des Grundriemens (8) angelöst wird, und wobei nach Umspritzung das Material abgekühlt wird und durch Abkühlung der Klemmkörper (10) stoffschlüssig mit dem Grundriemen (8) verbunden wird.

15. Verfahren nach Anspruch 13, **dadurch gekennzeichnet, dass** der Klemmkörper (10, 10', 10'') der Riemenendbefestigung (9) aus wenigstens zwei schalenartigen Klemmelementen (38, 39) gebildet wird, wobei nach Herstellung des Grundriemens (8) die zu verbindenden Oberflächen des Grundriemens (8) und der Klemmelemente (38, 39) mittels eines Lösungsmittels angelöst und unter Erwärmung zur Bildung der Riemenendbefestigung (9) zusammengelegt werden und anschließend die zu verbindenden Oberflächen unter Druckeinwirkung für eine vorbestimmte Zeitdauer zusammengehalten werden.
